# EUROPEAN PATENT APPLICATION

(11) **EP 2 854 452 A1**
(43) Date of publication of application: **01.04.2015**
(21) Application number: 13306320.6
(22) Date of filing: 26.09.2013
(51) Int. Cl.: H04W 36/22

(54) **Wireless telecommunications network nodes and methods**

(71) Applicant: ALCATEL LUCENT, 92100 Boulogne-Billancourt (FR)
(72) Inventor: Wong, Shin Horng, Swindon, Wiltshire SN5 7DJ (GB); Puddle, Nicola, Swindon, Wiltshire SN5 7DJ (GB); Brend, Graham, Swindon, Wiltshire SN5 7DJ (GB)
(74) Representative: Leppard, Andrew John

(57) **Abstract**

Wireless telecommunications network nodes, methods and computer program products are disclosed. A wireless telecommunications network node method comprises: allocating each user equipment within a cell supported by the network node to one of a plurality of groups of user equipment; and transmitting a group message to at least one of the plurality of groups of user equipment, the group message providing an indication of a cell bias to be used by user equipment allocated to that group of user equipment, the cell bias being associated with at least one neighbouring cell which is a neighbour to the cell supported by the network node. In this way, it is possible for user equipment to be grouped together and for a single group message to be transmitted in order to adjust the cell bias for that group of user equipment. It will be appreciated that this provides for greater load control between cells, but avoids the need for individual messages to be transmitted to each user equipment within the cell.

## Description

### FIELD OF THE INVENTION

The present invention relates to wireless telecommunications network nodes, methods and computer program products.

### BACKGROUND

Wireless telecommunication networks are known. In such networks, mobile communication devices (for example, mobile telephones) are operable to communicate with base stations provided by network providers.

In known wireless telecommunication networks, radio coverage is provided to network connectable devices, such as mobile telephones, or wireless devices such as tablets, within areas known as cells. A base station is located in each cell to provide radio coverage. Typically, network connectable devices in each cell are operable to receive information and data from a base station and to transmit information and data to a base station.

User equipment roam through the wireless communications network. Base stations are typically provided which support areas of radio coverage. A number of such base stations are provided and are distributed geographically in order to provide a wide area of coverage to user equipment.

When user equipment is within an area served by a base station, communications may be established between the user equipment and the base station over associated radio links.

Traditional base stations provide coverage in relatively large geographical areas and those cells are often referred to as macro cells. It is possible to provide a heterogeneous network (HetNet) where smaller-sized cells are provided within macro cells. Such smaller sized cells are sometimes referred to as low-power nodes (LPN), micro cells, pico cells or femto cells. One way to establish a small cell is to provide a small cell base station that provides coverage having a relatively limited range within the coverage area of the macro cell. The transmission power of a small cell base station is relatively low and, hence, each small cell provides a small coverage area compared to that of a macro cell and covers, for example, an office or a home.

Such small cells are typically provided where the communications coverage provided by the macro cell is poor or where a user wishes to use an alternative communications link provided locally, by the small cell base station, to communicate with the core network, and/or to increase capacity within a network.

Deployment of small cells in a wireless communication network can assist a network in relation to handling capacity in high traffic areas, for example, so-called hot spot areas. An ability to offload traffic to a small cell or cells located in a high traffic area of a network may be particularly useful to a network operator.

Although HetNet deployments may offer advantages, unexpected consequences of such deployments may occur. It is desired to address those consequences.

### SUMMARY

According to a first aspect, there is provided a wireless telecommunications network node method, comprising: allocating each user equipment within a cell supported by the network node to one of a plurality of groups of user equipment; and transmitting a group message to at least one of the plurality of groups of user equipment, the group message providing an indication of a cell bias to be used by user equipment allocated to that group of user equipment, the cell bias being associated with at least one neighbouring cell which is a neighbour to the cell supported by the network node.

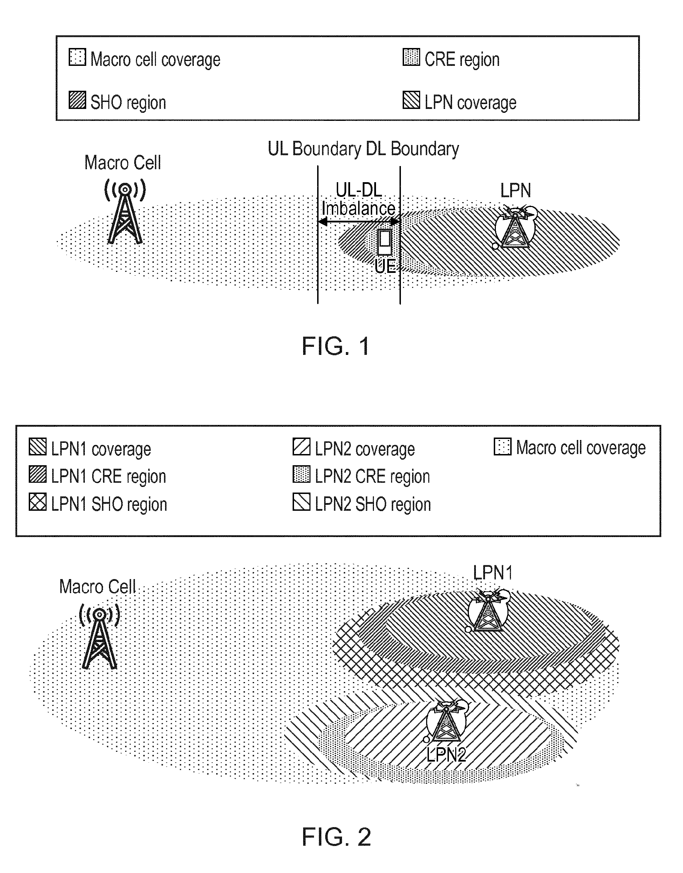

The first aspect recognises that in a HetNet deployment, small cells are deployed under macro cell coverage to improve capacity of the system. Small cells are also often referred to as Low Power Nodes (LPNs). Figure 1 shows a HetNet deployment with a macro cell and a LPN. The uplink (UL) boundary is where the user equipment uplink path loss to the macro cell and to the small cell are the same. Similarly the downlink (DL) boundary is where the received pilot power from the macro cell and the received pilot power from the small cell are the same at the UE. In a homogeneous network (i.e. macro cell only deployment), the UL and DL boundaries are at the same point. However, in HetNet deployment, the small cell has a lower transmit power than that of the macro cell. As a consequence of this, the UL and DL boundaries are different as shown in Figure 1. The region between the UL and DL boundaries is referred to as the UL-DL imbalance region.

Cell Range Expansion (CRE) is a technique used in Universal Mobile Telecommunications System (UMTS) and Long Term Evolution (LTE) networks, where the handover of user equipment in the macro cell is biased towards the LPN by setting the Cell Individual Offset (CIO) appropriately for that LPN. Although the user equipment in the CRE region will suffer from high interference from the macro due to an early handover to the LPN, it is expected that the additional capacity offered by the LPN will lead to an overall system throughput gain, so using CRE to bias user equipment towards LPNs is an attractive feature for many operators. The amount of biasing should typically depend upon the load of the LPN and the macro.

The first aspect also recognises that existing mechanism used to change the biasing (CIO) is based on System Information Block (SIB) broadcast and dedicated RRC signalling. If SIB broadcast is used the user equipment is only expected to read the SIB occasionally especially for user equipment in CELL_FACH and CELL_DCH states, so this does not guarantee that all user equipment will read the SIB promptly and hence the changes to the CIO may not be propagated to all the user equipment in the cell. Additionally, using SIB broadcast to update the CIO value means that only one CIO value for the cell can be applied to all user equipment in the cell, regardless of whether increasing the bias towards the LPN will cause increased interference to user equipment or not, particularly since the interference experienced by user equipment will vary e.g. due to the user equipment tolerance to interference within the CRE region. Alternatively, since a change in CIO needs to reach all user equipment in the cell, individual RRC messages can be used to explicitly signal a change in the CIO to each user equipment, however this would lead to high amount of signalling, which is far from ideal.

Accordingly, a method is provided. The method may comprise the step of allocating user equipment within a cell to one of a plurality of groups of user equipment. The method may also comprise the step of transmitting a group message to one or more of the plurality of groups of user equipment. The group control message may provide an indication of a cell (handover and reselection) bias to be used by user equipment allocated to that group of user equipment. The cell bias may be associated with one or more neighbouring cells which neighbour the cell supported by the network node. In this way, it is possible for user equipment to be grouped together and for a single group message to be transmitted in order to adjust the cell bias for that group ofuser equipment. It will be appreciated that this provides for greater load control between cells, but avoids the need for individual messages to be transmitted to each user equipment within the cell.

In one embodiment, the cell bias comprises a cell handover bias.

In one embodiment, the step of allocating comprises allocating each user equipment to one of a plurality of groups of user equipment based on a capability of the user equipment. Accordingly, groups may be formed based on particularly capabilities, functions or performance characteristics of user equipment.

In one embodiment, the step of allocating comprises allocating each user equipment to one of a plurality of groups of user equipment so that each user equipment within a group shares a common capability. Accordingly, each user equipment within a group may share a common capability

In one embodiment, the step of allocating comprises allocating each user equipment to one of a plurality of groups of user equipment by allocating each user equipment within a group a common identifier. Arranging for each user equipment within a group to share a common identifier is a convenient mechanism by which the user equipment may be grouped together.

In one embodiment, the common identifier comprises a Radio Network Transaction Identifier.

In one embodiment, the group message is encoded with an indication of which of the plurality of groups of user equipment the group message is intended. Accordingly, the group for which the group message is intended may be identified.

In one embodiment, the group message is encoded with the common identifier identifying which of the plurality of groups of user equipment the group message is intended. Accordingly, the group message may readily be identified by the common identifier for that group.

In one embodiment, the group message provides a cell bias to be used by user equipment allocated to that group of user equipment for each neighbouring cell. Accordingly, the group message may provide an absolute cell bias for use by user equipment within that group.

In one embodiment, the step of allocating comprises allocating each user equipment within a group a first cell bias value for each neighbouring cell and the group message provides a second cell bias to be used in conjunction with the first cell bias value by user equipment allocated to that group of user equipment. Accordingly, two bias values may be utilised together to arrive at a cell bias value to be used. One of the bias values may comprise an initial or common cell bias value, whilst the other may comprise a bias offset value to be applied to the initial cell bias value. The common cell bias value may be adjusted by the cell bias offset provided within the group message in order to adjust the cell bias value for all user equipment within that group.

In one embodiment, the group message is encoded to be receivable when the user equipment is in any one of a number of different states.

In one embodiment, the group message comprises one of an HS-SCCH order and a Radio Resource Connection message. Accordingly, the group message may be provided in a variety of different forms.

In one embodiment, the method comprises transmitting the group message to at least one of the plurality of groups of user equipment in response to changes in load being experienced by at least one of the cell and the neighbouring cell, the group message providing one of an updated indication of a cell bias and an updated cell bias offset to be used by user equipment allocated to that group of user equipment. Accordingly, the cell bias may be updated in response to changes in load being experienced by the cells.

According to a second aspect, there is provided a wireless telecommunications network node, comprising: allocation logic operable to allocate each user equipment within a cell supported by the network node to one of a plurality of groups of user equipment; and transmission logic operable to transmit a group message to at least one of the plurality of groups of user equipment, the group message providing an indication of a cell bias to be used by user equipment allocated to that group of user equipment, the cell bias being associated with at least one neighbouring cell which is a neighbour to the cell supported by the network node.

In one embodiment, the cell bias comprises a cell handover bias.

In one embodiment, the allocation logic is operable to allocate each user equipment to one of a plurality of groups of user equipment based on a capability of the user equipment.

In one embodiment, the allocation logic is operable to allocate each user equipment to one of a plurality of groups of user equipment so that each user equipment within a group shares a common capability.

In one embodiment, the allocation logic is operable to allocate each user equipment to one of a plurality of groups of user equipment by allocating each user equipment within a group a common identifier.

In one embodiment, the common identifier comprises a Radio Network Transaction Identifier.

In one embodiment, the group message is encoded with an indication of which of the plurality of groups of user equipment the group message is intended.

In one embodiment, the group message is encoded with the common identifier identifying which of the plurality of groups of user equipment the group message is intended.

In one embodiment, the group message provides a cell bias to be used by user equipment allocated to that group of user equipment for each neighbouring cell.

In one embodiment, the allocation logic is operable to allocate each user equipment within a group a first cell bias value for at least one neighbouring cell and the group message provides a second bias value to be used in conjunction with the first bias value by user equipment allocated to that group of user equipment. It will be appreciated that the first cell bias value may be provided for one or more of the neighbouring cells. In embodiments, the second bias value may be specific for each neighbouring cell.

In one embodiment, the group message is encoded to be receivable when the user equipment is in any one of a number of different states.

In one embodiment, the group message comprises one of an HS-SCCH order and a Radio Resource Connection message.

In one embodiment, the transmission logic is operable to transmit the group message to at least one of the plurality of groups of user equipment in response to changes in load being experienced by at least one of the cell and the neighbouring cell, the group message providing one of an updated indication of a cell bias and an updated cell bias offset to be used by user equipment allocated to that group of user equipment.

According to a third aspect, there is provided a wireless telecommunications user equipment method, comprising: receiving an indication of a group of user equipment to which the user equipment is allocated; and receiving a group message providing an indication of a cell bias to be used by user equipment allocated to that group of user equipment, the cell bias being associated with at least one neighbouring cell which is a neighbour to a cell supporting the user equipment.

In one embodiment, the cell bias comprises a cell handover bias.

In one embodiment, each user equipment within a group shares a common capability.

In one embodiment, the indication comprises a group common identifier.

In one embodiment, the group common identifier comprises a Radio Network Transaction Identifier.

In one embodiment, the group message is encoded with an indication of which of the plurality of groups of user equipment the group message is intended.

In one embodiment, the group message is encoded with the common identifier identifying which of the plurality of groups of user equipment the group message is intended.

In one embodiment, the group message provides a cell bias to be used by user equipment allocated to that group of user equipment for each neighbouring cell.

In one embodiment, the indication includes a first cell bias value for each neighbouring cell and the group message provides a second bias value to be used in conjunction with the first bias value by user equipment allocated to that group of user equipment.

In one embodiment, the group message is encoded to be receivable when the user equipment is in any one of a number of different states.

In one embodiment, the group message comprises one of an HS-SCCH order and a Radio Resource Connection message.

In one embodiment, the method comprises receiving the group message providing one of an updated indication of a cell bias and an updated cell bias offset to be used by user equipment allocated to that group of user equipment.

According to a fourth aspect, there is provided wireless telecommunications user equipment, comprising: reception logic operable to receive an indication of a group of user equipment to which the user equipment is allocated; and receiving a group message providing an indication of a cell bias to be used by user equipment allocated to that group of user equipment, the cell bias being associated with at least one neighbouring cell which is a neighbour to a cell supporting the user equipment.

In one embodiment, the cell bias comprises a cell handover bias.

In one embodiment, each user equipment within a group shares a common capability.

In one embodiment, the indication comprises a group common identifier.

In one embodiment, the group common identifier comprises a Radio Network Transaction Identifier.

In one embodiment, the group message is encoded with an indication of which of the plurality of groups of user equipment the group message is intended.

In one embodiment, the group message is encoded with the common identifier identifying which of the plurality of groups of user equipment the group message is intended.

In one embodiment, the group message provides a cell bias to be used by user equipment allocated to that group of user equipment for each neighbouring cell.

In one embodiment, the indication includes a first bias value for each neighbouring cell and the group message provides a second bias value to be used in conjunction with the first bias value by user equipment allocated to that group of user equipment.

In one embodiment, the group message is encoded to be receivable when the user equipment is in any one of a number of different states.

In one embodiment, the group message comprises one of an HS-SCCH order and a Radio Resource Connection message.

In one embodiment, the reception logic is operable to receive the group message providing one of an updated indication of a cell bias and an updated cell bias offset to be used by user equipment allocated to that group of user equipment.

According to a fifth aspect, there is provided a computer program product operable, when executed on a computer, to perform the method steps of the first or third aspects.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates an uplink-downlink imbalance region; and
Figure 2 illustrates an example deployment according to one embodiment.

### DESCRIPTION OF THE EMBODIMENTS

### Overview

Before discussing embodiments in any more detail, first an overview will be provided. Embodiments provide a technique whereby user equipment are grouped into groups and the cell bias values for that group may be adjusted in order to control handover between cells, typically in order to balance the load between those cells. Grouping user equipment in this way provides a convenient technique since user equipment with similar capabilities may be grouped together since they may be able to share similar bias values. This provides for greater control over the setting of bias values than would be possible by either setting a single set of bias values for all user equipment within the cell or by individually allocating bias values to user equipment within the cell. The arrangement of the groups and the messaging to the user equipment within those groups may be performed in any convenient way using new or existing messaging. Such an arrangement provides for more efficient control of load balancing.

### User Equipment Grouping

Embodiments divide the user equipment in a cell into groups and introduce one or more new common signal(s) or message(s) containing Cell Individual Offset (CIO) update information. These new common signal(s) are sent to the user equipment within a cell to update the user equipment's CIO value(s). Typically, the CIO values are for every neighbouring cell either within one new common signal (with a CIO value for all the neighbouring cells) and/or within individual new common signals (each with a CIO value for each of the neighbouring cells). For example, if a cell has 6 neighbouring cells, then the common signal would contain CIO values for each of those 6 neighbouring cells to be used by each user equipment within a group; with different common signals containing (typically) different CIO values for each different group (although in some circumstances different groups may be provided with the same set of CIO values). That is to say that each different group typically receives a different set of CIO values. However, it will be appreciated that, as mentioned above, the common signal may contain a CIO value for just one neighbouring cell. Also, it is possible that the CIO values for each group are the same, e.g. more than one group has some or all of the CIO values for neighbouring cells set the same (whilst it is likely that each group will receive a different set of values, there can be situations where groups are sent separate messages, but the CIO values in the messages are the same as that sent to another group).

One way of grouping the user equipment is based on the user equipment's capability. For example, user equipment that have an interference cancellation capability would tolerate a higher interference and hence they would be grouped into a group. User equipment in this group can therefore have more aggressive biasing (CIO) compared to another group that has a lower tolerance to interference. Of course, grouping by other characteristics is possible.

In an embodiment, each user equipment within the group is identified by a common Radio Network Temporary Identifier (RNTI). The common signal would contain this common RNTI in which the user equipment with a matching common RNTI would read this common signal and update their CIO.

In an embodiment, for a Universal Mobile Telecommunications System (UMTS) network, the common signal is a common High Speed-Shared Control Channel (HS-SCCH) order. User equipment in each group is configured with a common H-RNTI. User equipment receiving this common signal will only obey and update their CIO values if the H-RNTI matches that in the order (i.e. the cyclic redundancy check (CRC) of the common signal is masked with the user equipment common H-RNTI).

In 3GPP TS 25.331, the existing common H-RNTI in the CELL_FACH state is assigned to the user equipment by calculating the index to the common H-RNTI using the following:

U-RNTI MOD *K*

where *K* is the number of common H-RNTI broadcast in the System Information Block (SIB). In another embodiment, the existing CELL_FACH common H-RNTI is reused by carefully selecting the U-RNTI of the user equipment such that the user equipment falls into the intended group. However, this would reduce the flexibility of the network to assign the groups as compared to a configurable common H-RNTI.

In another embodiment, for UMTS, the common H-RNTI is applicable to both CELL_FACH and CELL_DCH. Hence the common HS-SCCH order is applicable in both RRC states (CELL_FACH and CELL_DCH). This allows the network to change the CIO using a single order for user equipment in different states. It should be noted that CELL_FACH and CELL_DCH currently do not share the orders, i.e. an order number in CELL_FACH would mean a different thing to the same order number in CELL_DCH.

### CIO Values

In one embodiment, a set of absolute CIO values are sent to each group. That is to say that the common signal specifies a complete set of CIO values that are to be used by each user equipment within a group. Different groups will typically receive a common signal specifying a different set of CIO values that are to be used by each user equipment within that group (although in some circumstances different groups may be provided with the same set of CIO values as mentioned above). Changes are the CIO values are made by retransmitting the common signal with a new set of CIO values that are to be used by each user equipment within a group.

### CIO Offsets

In another embodiment, the group of user equipment is defined by a configurable CIO offset. A single common signal containing a CIO common value is sent to all user equipment within a cell. The user equipment reads this CIO common value and applies the offset assigned to it (which is based on its group). In this way, only a single common signal is required and no common RNTI is required. For example, each different group is allocated a different set of CIO offset values. In an example where there are 6 neighbouring cells, each different group is allocated a different set of 6 CIO offset values - these may be preconfigured or allocated once (typically when the user equipment is first allocated into a group when connecting to the cell). Then, the single common signal containing a set of 6 CIO common values is sent to all user equipment within the cell; this single common signal can be sent when updates to the CIO common values are required. Each group then applies the CIO offset values for that group to the CIO common values to arrive at a set of CIO values to be used.

### Radio Resource Control (RRC) Messaging

In one embodiment, the common signal is a common RRC message. A common identifier (ID) would need to be assigned to each group of user equipment. In UMTS, the common H-RNTI as per the above embodiment can be used where the RRC message is carried by High Speed Physical Downlink Shared Channel (HS-PDSCH) using the common H-RNTI in the HS-SCCH. In LTE, a common C-RNTI can be defined and assigned to the relevant group of user equipment. The Enhanced Physical Downlink Control Channel (E)PDCCH can then use this common C-RNTI to indicate this common RRC message. RRC message can be used since it can contain more information such as changes to CIO for multiple cells.

### Example Operation

In this example we assume a UMTS network. It should be appreciated that this solution is also applicable to Long Term Evolution (LTE) networks.

Assume that there are 2 low powered nodes (LPNs), namely LPN1 and LPN2 in a macro cell coverage as shown in Figure 2.

User equipment are grouped according to capability such that:
1) Group 1: contains user equipment capable of inter-cell interference cancellation utilizing Network Assisted Information;
2) Group 2: contains user equipment capable of inter-cell interference suppression utilizing Network Assisted Information; and
3) Group 3: contains user equipment not capable of inter-cell interference cancellation/ suppression.

The user equipment in Group 1 can tolerate high interference and, hence, the network can apply aggressive biasing (high CIO value(s)) to this group of user equipment. Group 2 can tolerate moderate/high interference and, hence, the network can apply moderate/high biasing (moderate/high CIO value(s)) to this group of user equipment. Group 3 can tolerate low interference and, hence, the network can apply low biasing (low CIO value(s)) to this group of user equipment.

As mentioned above, common H-RNTIs are configured to the user equipment in each group, i.e.:
1) Group 1 user equipment are given common H-RNTI *X*;
2) Group 2 user equipment are given common H-RNTI *Y*; and
3) Group 3 user equipment are given common H-RNTI *Z*.

In a decentralized biasing arrangement, each LPN would calculate its loading and send the 5% user throughput to the Radio Network Controller (RNC). The RNC uses an algorithm with the 5% user throughput from each LPN and calculates an update to the CIO values. In this example, LPN1 has low load and therefore the RNC determines that it can increase LPN1's CIO such that more user equipment can move into this cell. The RNC then passes the CIO update to the macro cell, where the CIO for Group 1 shall increase by 1.5 dB, Group 2 by 1 dB and Group 3 by 0.5 dB.

The macro cell then sends 3 common HS-SCCH orders:
1) Common HS-SCCH order with CRC masked with H-RNTI *X*. Order contains index to Cell ID of LPN1 and that the user equipment shall increase its CIO by 1.5 dB
2) Common HS-SCCH order with CRC masked with H-RNTI *Y*. Order contains index to Cell ID of LPN1 and that the user equipment shall increase its CIO by 1.0 dB
3) Common HS-SCCH order with CRC masked with H-RNTI *Z*. Order contains index to Cell ID of LPN1 and that the user equipment shall increase its CIO by 0.5 dB

The user equipment in each group would decode their respective common HS-SCCH orders and would therefore update their CIO values.

This method allows the CIO value to be efficiently updated to user equipment within a cell.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A wireless telecommunications network node method, comprising:
allocating each user equipment within a cell supported by said network node to one of a plurality of groups of user equipment; and
transmitting a group message to at least one of said plurality of groups of user equipment, said group message providing an indication of a cell bias to be used by user equipment allocated to that group of user equipment, said cell bias being associated with at least one neighbouring cell which is a neighbour to said cell supported by said network node.

2. The method of claim 1, wherein said step of allocating comprises allocating each user equipment to one of a plurality of groups of user equipment based on a capability of said user equipment.

3. The method of claim 1 or 2, wherein said step of allocating comprises allocating each user equipment to one of a plurality of groups of user equipment so that each user equipment within a group shares a common capability.

4. The method of any preceding claim, wherein said step of allocating comprises allocating each user equipment to one of a plurality of groups of user equipment by allocating each user equipment within a group a common identifier.

5. The method of any preceding claim, wherein said common identifier comprises a Radio Network Transaction Identifier.

6. The method of any preceding claim, wherein said group message is encoded with an indication of which of said plurality of groups of user equipment said group message is intended.

7. The method of any preceding claim, wherein said group message is encoded with said common identifier identifying which of said plurality of groups of user equipment said group message is intended.

8. The method of any preceding claim, wherein said group message provides a cell bias to be used by user equipment allocated to that group of user equipment for each neighbouring cell.

9. The method of any preceding claim, wherein said step of allocating comprises allocating each user equipment within a group a first cell bias value for at least one neighbouring cell and said group message provides a second cell bias to be used in conjunction with said first cell bias value by user equipment allocated to that group of user equipment.

10. The method of any preceding claim, wherein said group message comprises one of an HS-SCCH order and a Radio Resource Connection message.

11. The method of any preceding claim, comprising transmitting said group message to at least one of said plurality of groups of user equipment in response to changes in load being experienced by at least one of said cell and said neighbouring cell, said group message providing one of an updated indication of a cell bias and an updated cell bias offset to be used by user equipment allocated to that group of user equipment.

12. A wireless telecommunications network node, comprising:
allocation logic operable to allocate each user equipment within a cell supported by said network node to one of a plurality of groups of user equipment; and
transmission logic operable to transmit a group message to at least one of said plurality of groups of user equipment, said group message providing an indication of a cell bias to be used by user equipment allocated to that group of user equipment, said cell bias being associated with at least one neighbouring cell which is a neighbour to said cell supported by said network node.

13. A wireless telecommunications user equipment method, comprising:
receiving an indication of a group of user equipment to which said user equipment is allocated; and
receiving a group message providing an indication of a cell bias to be used by user equipment allocated to that group of user equipment, said cell bias being associated with at least one neighbouring cell which is a neighbour to a cell supporting said user equipment.

14. Wireless telecommunications user equipment, comprising:
reception logic operable to receive an indication of a group of user equipment to which said user equipment is allocated; and
receiving a group message providing an indication of a cell bias to be used by user equipment allocated to that group of user equipment, said cell bias being associated with at least one neighbouring cell which is a neighbour to a cell supporting said user equipment.

15. A computer program product operable, when executed on a computer, to perform the method steps of any one of claims 1 to 11 and 13.
